# EUROPÄISCHE PATENTANMELDUNG

(11) **EP 0 797 320 A2**
(43) Veröffentlichungstag der Anmeldung: **24.09.1997**
(21) Anmeldenummer: 97103510.0
(22) Anmeldetag: 04.03.1997
(51) Int. Cl.: H04B 7/26

(54) **Repeater-Verstärkeranordnung für Mobiltelefon-Funknetz mit Trägerfrequenzumsetzung**

(30) Priorität: 22.03.1996 DE 19611342
(71) Anmelder: MIKOM GmbH, 86675 Buchdorf (DE)
(72) Erfinder: Schmidt, Karl-Heinz, 86753 Möttingen-Balgheim (DE)
(74) Vertreter: Charrier, Rolf, Dipl.-Ing.

(57) **Zusammenfassung**

Die Erfindung betrifft eine Repeater-Anordnung mit einem Repeater-Verstärker (1), welcher einen Eingang (2) zur Aufnahme eines von einer Empfangsantenne (3) aufgenommenen, hochfrequenten Eingangssignals (F1) und einen Ausgang (4) zur Ausgabe eines diesem Eingangssignal (F1) zugeordneten, hochfrequenten Ausgangssignals (F3) eine Sendeantenne (5) zur Versorgung von Mobilstationen (6, 7) aufweist. Bekannte derartige Anordnungen eignen sich nicht für moderne Mobilfunk-Telefonnetze, da es dem Benutzer nicht zugemutet werden kann, nach einem Funkplan ständig auf die aktuelle Empfangsfrequenz zu schalten.

Die Aufgabe, eine Repeater-Anordnung so auszubilden, daß sie sich für ein Mobiltelefon-Funknetz eignet, wird dadurch gelöst, daß die Trägerfrequenz des Ausgangssignals (F3) gegenüber der Trägerfrequenz des Eingangssignals (F1) versetzt ist und mindestens ein weiterer Repeater-Verstärker (8, 9) vorgesehen ist, dessen Eingang (10, 11) das frequenzversetzte Ausgangssignal (F3) zugeführt wird, der es auf die ursprüngliche Frequenz des Eingangssignals (F1) umsetzt und über einen Ausgang (12, 13) zu den Mobilstationen (6, 7) ausstrahlt.

## Beschreibung

Die Erfindung betrifft eine Repeater-Anordnung nach dem Oberbegriff des Anspruchs 1.

Derartige Repeater-Anordnungen werden insbesondere im Mobilfunkbereich häufig eingesetzt. Sie dienen der Versorgung von Funkteilnehmern, welche infolge zu hoher Dämpfung des hochfrequenten Signals nicht direkt von einer Basisstation aus erreicht werden können. Vor Aufbau der Funktelefonnetze wurden repeaterähnliche Verstärker als Relaisstellen bezeichnet und dienten beispielsweise der Zwischenverstärkung von Polizei- und Militärfunk.

Im einfachsten Falle weist ein Repeater-Verstärker einen Anschluß auf, an welchen eine Anbindungsantenne angeschlossen ist sowie einen weiteren Anschluß, an welchen eine Versorgungsantenne angeschlossen ist. Über die Anbindungsantenne empfängt der Repeater-Verstärker ankommende Signale, verstärkt sie und leitet sie an die Versorgungsantenne weiter. Da die empfangenen und verstärkten Signale auf der gleichen Frequenz liegen, müssen die an den Repeater-Verstärker angeschlossenen Antennen jedoch elektrisch entkoppelt sein, um Störungen durch Interferenzen und Selbsterregungsvorgänge ein- und auslaufender Signale zu vermeiden. Diese elektrische Entkopplung erfordert im allgemeinen eine räumliche Trennung beider Antennen.

Bereits bei den oben genannten Relaisstationen, welche seit Jahrzehnten bekannt sind, machte man daher Gebrauch von sogenannten frequenzumsetzenden Systemen. Das Eingangssignal von der Basisstation wurde in der Relaisstation also nicht nur verstärkt, sondern es wurde auch seine Trägerfrequenz verschoben. Hierdurch ist es möglich, Sende- und Empfangsantennen räumlich nahe aneinander zu bringen, ohne daß Interferenzen entstehen. Allerdings müssen die Empfänger bei den Mobilstationen über die Betriebsweise der nächstliegenden Relaisstation informiert sein und ihr Empfangsgerät nach einem vorgegebenen Funkplan auf die Frequenz der Relaisstation einstellen, in deren Bereich sie sich befinden. Jeder Kanal wurde auf diese Weise in ein Unterband und in ein Oberband unterteilt. Ein derartiges System ist beispielsweise in der österreichischen Patentschrift Nr. 277 325 beschrieben.

Die beschriebenen Relaisstationen eignen sich nicht für moderne Mobilfunk-Telefonnetze, da es dem Benutzer eines mobilen Telefons nicht zugemutet werden kann, nach einem Funkplan ständig auf die aktuelle Empfangsfrequenz zu schalten. Dies muß, genauso wie der Frequenzwechsel bei Eintreten in eine andere Funkzelle, automatisch erfolgen.

Es besteht daher die Aufgabe, eine Repeater-Anordnung so auszubilden, daß sie sich für ein Mobiltelefon-Funknetz eignet. Insbesondere soll sich die Anordnung zur Sicherstellung der Funkversorgung von Mobiltelefonen im Inneren von Gebäuden eignen.

Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel der Erfindung wird im folgenden unter Bezugnahme auf die begleitende Zeichnung näher erläutert, welche eine erfindungsgemäße Repeater-Anordnung, zusammen mit einigen Mobilstationen, schematisch darstellt.

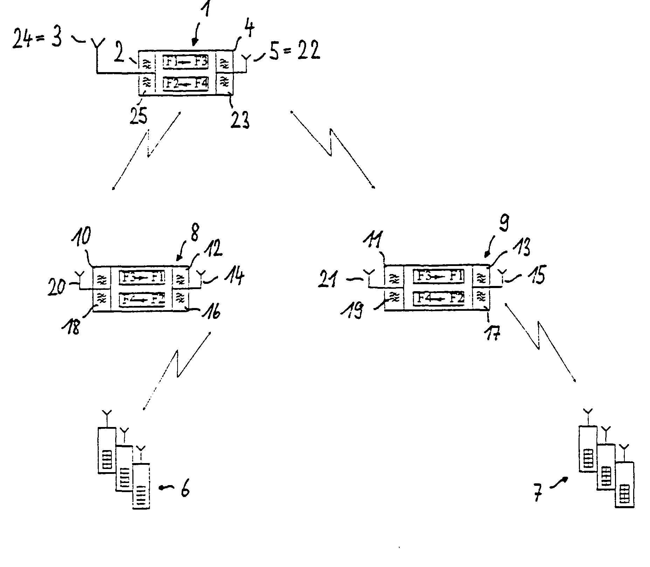

In der Zeichnung ist ein erster Repeater-Verstärker 1 dargestellt, der einen ersten Eingang 2 und einen ersten Ausgang 4 aufweist. An den ersten Eingang 2 ist eine Anbindungsantenne 3 angeschlossen, welche die von einer Basisstation kommenden hochfrequenten Signale aufnimmt. Diese Signale haben eine Trägerfrequenz F1. An den ersten Ausgang 4 des Repeater-Verstärkers 1 ist eine Versorgungsantenne 5 angeschlossen.

Unter dem ersten Repeater-Verstärker 1 sind zwei weitere Repeater-Verstärker 8 bzw. 9 dargestellt. Diese Repeater-Verstärker weisen jeweils einen ersten Eingang 10 bzw. 11 und einen ersten Ausgang 12 bzw. 13 auf. An die ersten Eingänge 10 bzw. 11 ist jeweils eine Anbindungsantenne 20 bzw. 21 angeschlossen. An die ersten Ausgänge 12 bzw. 13 ist jeweils eine Versorgungsantenne 14 bzw. 15 angeschlossen. Der räumliche Bereich, welchen die weiteren Repeater-Verstärker 8 bzw. 9 mit Funksignalen versorgen können, ist begrenzt. In der Zeichnung kann der links dargestellte Repeater-Verstärker 8 die darunter dargestellten Mobilstationen 6 mit Funksignalen versorgen, während der rechts dargestellte Repeater-Verstärker 9 die rechts dargestellten Mobilstationen 7 mit Funksignalen versorgen kann.

Beide weiteren Repeater-Verstärker 8 und 9 weisen jeweils einen zweiten Eingang 16 bzw. 17 und einen zweiten Ausgang 18 bzw. 19 auf. Diese zweiten Eingänge 16 bzw. 17 sind an eine Empfangsantenne 14 bzw. 15 angeschlossen, die in der dargestellten Ausführungsform identisch mit den Versorgungsantennen 14 bzw. 15 der ersten Ausgänge 12 bzw. 13 der weiteren Repeater-Verstärker 8 bzw. 9 ist. Die zweiten Eingänge 16 bzw. 17 dienen der Aufnahme von Funksignalen von den Mobilstationen 6 bzw. 7. Zur Weiterleitung dieser Funksignale weisen die weiteren Repeater-Verstärker 8 bzw. 9 zwei der Ausgänge 18 bzw. 19 auf, an welche Sendeantennen 20 bzw. 21 angeschlossen sind, die wiederum identisch mit den Anbindungsantennen 20 bzw. 21 für die ersten Eingänge 10 bzw. 11 dieser Repeater-Verstärker 8 bzw. 9 sind.

Auch der erste Repeater-Verstärker 1 weist einen weiteren Eingang 23 auf, dessen Empfangsantenne 22 gleichzeitig die Versorgungsantenne 5 des ersten Ausgangs 4 dieses Repeater-Verstärkers ist sowie einen zweiten Ausgang 25, dessen Sendeantenne 24 gleichzeitig die Anbindungsantenne 3 des ersten Eingangs 2 dieses Repeater-Verstärkers 1 ist.

Neben der eigentlichen Verstärkungseinheit weisen sämtliche Repeater-Verstärker 1, 8 und 9 in beiden Richtungen Vorrichtungen zur Verschiebung der Trägerfrequenz der empfangenen Signale auf, welche weiter unten an Hand der Funktionsweise der Repeater-Anordnung näher erläutert werden.

In einer bevorzugten Ausgestaltung der Erfindung dient diese der Versorgung der Innenräume von Gebäuden, welche unmittelbar von der Basisstation aus nicht zu erreichen sind, da das Gebäude beispielsweise aus Stahlbeton gefertigt ist oder metallisierte Scheiben aufweist, welche eine Barriere gegenüber Funksignalen bilden. In diesem Falle wird der erste Repeater-Verstärker 1 außerhalb des Gebäudes, vorzugsweise auf dessen Dach angeordnet und dort mit einer Sende-/Anbindungsantenne 24/3 sowie mit einer Empfangs-/Versorgungsantenne 22/5 verbunden. Die weiteren Repeater-Verstärker 8 und 9, tatsächlich kann es sich um eine unbegrenzte Vielzahl weiterer Repeater-Verstärker handeln, werden beispielsweise in den verschiedenen Stockwerken des Gebäudes an geeigneten Stellen untergebracht und kleinere Antennen, nämlich je eine Anbindungs- und eine Versorgungsantenne, werden an sie angeschlossen. Auf diese Weise stellt jeder weitere Repeater-Verstärker 8, 9 ... die Funkversorgung für ein Stockwerk des Gebäudes sicher.

Die Repeater-Verstärker funktioniert wie folgt:

Dem ersten Eingang 2 des auf dem Dach des Gebäudes montierten ersten Repeater-Verstärkers 1 werden über die Anbindungsantenne 3 die auf einer Trägerfrequenz F1 liegenden Signale einer Basisstation zugeführt. Der Repeater-Verstärker 1 verstärkt diese Signale und setzt gleichzeitig die Trägerfrequenz auf eine Frequenz F3 um. Das Signal des Ausgangs 4 des Verstärkers 1, also die auf die Trägerfrequenz F3 umgesetzten Signale, werden der Versorgungsantenne 5 des Repeater-Verstärkers 1 zugeführt und von dort an die weiteren Repeater-Verstärker 8 bzw. 9 innerhalb des Gebäudes ausgestrahlt.

Diese empfangen das Signal bei der Frequenz F3 über ihre Anbindungsantennen 20 bzw. 21 und ihre Eingänge 10 bzw. 11, verstärken es und setzen es gleichzeitig auf die ursprüngliche Frequenz F1 zurück. Das zurückgesetzte Signal mit der Frequenz F1 wird dann den Ausgängen 12 bzw. 13 der weiteren Repeater-Verstärker 8 bzw. 9 und anschließend ihren Versorgungsantennen 14 bzw. 15 zugeführt. Von dort gelangt es zu den Mobilstationen 6 bzw. 7.

Falls die Mobilstation 6 bzw. 7 selbst sendeberechtigt ist, was in der Verwendung bei einem mobilen Telefonsystem immer der Fall ist, gelangen die Signale der Mobilstation 6 bzw. 7 zu den Empfangsantennen 14 bzw. 15 der weiteren Repeater-Verstärker 8 bzw. 9. Diese Signale liegen auf einer Frequenz F2, welche sich sowohl von der Frequenz F1 als auch von der Frequenz F3 unterscheidet. Sie werden von den weiteren Repeater-Verstärkern 8 bzw. 9 auf eine weitere Frequenz F4 umgesetzt und dann den Ausgängen 18 bzw. 19 und den Sendeantennen 20 bzw. 21 der weiteren Repeater-Verstärker 8 bzw. 9 zugeführt. Drahtlos verlaufen diese Signale zu dem ersten Repeater-Verstärker 1, von dessen Empfangsantenne 22 sie aufgenommen und dem zweiten Eingang 23 des Repeater-Verstärkers 1 zugeführt werden. Dieser setzt die auf einer Trägerfrequenz F4 liegenden Signale auf ihre ursprüngliche Frequenz F2 zurück und leitet sie über seinen Ausgang 25 und die Sendeantenne 24 der Basisstation zu.

Insbesondere in ihrer Verwendung innerhalb eines Gebäudes hat die vorliegende Anordnung den Vorteil, daß sowohl bei dem ersten Repeater-Verstärker 1 als auch bei den weiteren Repeater-Verstärkern 8 und 9 jeweils Sende- und Empfangsantennen unmittelbar nebeneinander liegen können, da keine Interferenzen und Selbsterregungsvorgänge durch gleiche Frequenzen auftreten.

In Ausnahmefällen kann es passieren, daß die weiteren Repeater-Verstärker 8 bzw. 9 das äußere Signal bei der Trägerfrequenz F1 unmittelbar empfangen. Da diese Repeater-Verstärker möglicherweise auch auf das unmittelbare Signal der Basisstation einlocken könnten, würde dieses Signal dann frequenzversetzt und bei einer falschen Frequenz ausgegeben werden. In einer bevorzugten Ausführungsform der Erfindung vergleichen daher die weiteren Repeater-Verstärker 8 bzw. 9 die an ihnen eingestellte Frequenz mit der im Organisationskanal des Signals gegebenen Frequenzinformation. Falls diese beiden Informationen identisch sind, empfängt der weitere Repeater-Verstärker 8 bzw. 9 unmittelbar das Signal der Basisstation und sucht einen anderen Kanal. Nur falls diese Informationen nicht identisch sind, empfängt der weitere Repeater-Verstärker 8 bzw. 9 das frequenzversetzte Signal des ersten Repeater-Verstärkers 1 - das natürlich in seinem Organisationskanal immer noch die Frequenzinformation F1 trägt - und weiß aufgrund dieser Abweichung, daß er auf der richtigen Frequenz empfängt.

## Patentansprüche

1. Repeater-Anordnung mit einem Repeater-Verstärker (1), welcher einen Eingang (2) zur Aufnahme eines von einer Empfangsantenne (3) aufgenommenen, hochfrequenten Eingangssignals (F1) und einen Ausgang (4) zur Ausgabe eines diesem Eingangssignal (F1) zugeordneten, hochfrequenten Ausgangssignals (F3) eine Sendeantenne (5) zur Versorgung von Mobilstationen (6, 7) aufweist, **dadurch gekennzeichnet**, daß die Trägerfrequenz des Ausgangssignals (F3) gegenüber der Trägerfrequenz des Eingangssignals (F1) versetzt ist und mindestens ein weiterer Repeater-Verstärker (8, 9) vorgesehen ist, dessen Eingang (10, 11) das frequenzversetzte Ausgangssignal (F3) zugeführt wird, der es auf die ursprüngliche Frequenz des Eingangssignals (F1) umsetzt und über einen Ausgang (12, 13) zu den Mobilstationen (6, 7) ausstrahlt.

2. Repeater-Anordnung nach Anspruch 1, **dadurch gekennzeichnet**, daß der weitere Repeater-Verstärker (8, 9) einen weiteren, an eine Empfangsantenne (14, 15) angeschlossenen Eingang (16, 17) zur Aufnahme der von den Mobilstationen (6, 7) kommenden Signale aufweist, einen weiteren Ausgang (18, 19) zur Ausgabe dieser, ebenfalls frequenzversetzten, Signale über eine Sendeantenne (20, 21) zum ersten Repeater-Verstärker (1) und der erste Repeater-Verstärker (1) einen zweiten, an eine Empfangsantenne (22) angeschlossenen Eingang (23) aufweist zur Aufnahme der von den weiteren Repeater-Verstärkern (8, 9) kommenden frequenzversetzten Signale sowie einen zweiten, an eine Sendeantenne (24) angeschlossenen Ausgang (25) zur Ausgabe dieser Signale nach Rücksetzung auf ihre ursprüngliche Frequenz.

3. Repeater-Anordnung nach Anspruch 1 oder 2, **dadurch gekennzeichnet**, daß eine Vielzahl weiterer Repeater-Verstärker (8, 9) vorgesehen ist, welche jeweils Mobilstationen (6, 7) innerhalb eines bestimmten örtlichen Bereichs versorgen.

4. Repeater-Anordnung nach einem der voranstehenden Ansprüche, **dadurch gekennzeichnet**, daß der erste Repeater-Verstärker (1), zusammen mit den ihm zugeordneten Antennen (3, 5; 22, 24) an einer exponierten Stelle eines Gebäudes angebracht ist und der oder jeder weitere Repeater-Verstärer (8, 9) an verschiedenen Stellen innerhalb des Gebäudes angeordnet sind.

5. Repeater-Anordnung nach einem der voranstehenden Ansprüche, **dadurch gekennzeichnet**, daß die hochfrequenten Signale digitale Mobilfunksignale und die Mobilstationen (6, 7) bewegliche Funktelefone sind.

6. Repeater-Anordnung nach Anspruch 5, **dadurch gekennzeichnet**, daß jeder weitere Repeater-Verstärker (8, 9) eine Prüfvorrichtung zum Vergleich der eingestellten Frequenz mit der im Organisationskanal des Signals gegebenen Frequenzinformation aufweist und bei Identität beider Frequenzen inaktiv wird.
